# EUROPÄISCHE PATENTSCHRIFT

(11) **EP 3 774 442 B1**
(45) Veröffentlichungstag und Bekanntmachung des Hinweises auf die Patenterteilung: **25.08.2021**
(21) Anmeldenummer: 19716346.2
(22) Anmeldetag: 03.04.2019
(51) Int. Cl.: B60N 2/10, B60N 2/14, B60N 2/02, B60N 2/42, B60N 2/427

(54) **SCHWEBESITZ**
FLOATING SEAT
SIÈGE FLOTTANT

(30) Priorität: 04.04.2018 DE 102018205058; 04.04.2018 DE 102018205076; 29.06.2018 DE 102018210716
(43) Veröffentlichungstag der Anmeldung: 17.02.2021
(73) Patentinhaber: Adient Engineering and IP GmbH, 51399 Burscheid (DE)
(72) Erfinder: DILLINGER, Thomas, 40880 Ratingen (DE)
(74) Vertreter: Liedhegener, Ralf
(86) Internationale Anmeldenummer: PCT/EP2019/058381
(87) Internationale Veröffentlichungsnummer: WO 2019/193040

(56) Entgegenhaltungen:
- DE-A1- 2 642 941
- DE-A1- 4 337 019
- ES-A1- 2 184 564

## Beschreibung

Die Erfindung betrifft einen Schwebesitz, insbesondere verriegelbarer Schwebesitz für ein Fahrzeug, insbesondere einen relativ zu einem Karosserieboden neigbaren Fahrzeugsitz.

Im Stand der Technik sind Schwebesitze (auch floating seat genannt) bekannt (siehe z.B. ES-A-2 184 564) um den Komfort zu maximieren. Im Allgemeinen benötigt ein Verriegelungsmechanismus zum Ver- oder Entriegeln des Schwebesitzes einige Sekunden. Zudem ist eine Verstellung des Sitzes während der Fahrt aus Sicherheitsgründen unerwünscht.

Aufgabe der vorliegenden Erfindung ist es, einen Schwebesitz mit verbessertem Komfort und besserer Sicherheit anzugeben.

Die Aufgabe wird erfindungsgemäß gelöst mit einem Schwebesitz, umfassend ein Basis- oder Trägerelement und eine Sitzschale, wobei zwischen Sitzschale und Basiselement ein Verstellmechanismus in Art eines Gelenk- oder Gleitlagers, insbesondere eines Kugelgelenk- oder Schalengleitlagers, ausgebildet ist, wobei die Sitzschale mittels des Verstellmechanismus in zumindest zwei oder allen drei Rotationsfreiheitsgraden relativ zum Basiselement verstellbar ist.

Die Aufgabe wird erfindungsgemäß gelöst mit einem Schwebesitz, umfassend ein Basis- oder Trägerelement, ein Adapterelement und eine Sitzschale, wobei zumindest zwischen Sitzschale und Adapterelement und/oder zwischen Adapterelement und Basiselement jeweils ein Verstellmechanismus in Art eines Gelenk- oder Gleitlagers, insbesondere eines Kugelgelenk- oder Schalengleit- oder Mehrgleitflächenlagers, gebildet ist, wobei die Sitzschale mittels des Verstellmechanismus in zumindest zwei oder in allen drei Rotationsfreiheitsgraden relativ zum Basiselement verstellbar ist.

Ein Aspekt sieht vor, dass die Sitzschale mittels des Verstellmechanismus relativ zum Basiselement zumindest um eine Querachse neigbar und um eine Hochachse drehbar ist.

In einer möglichen Ausführungsform ist die Sitzschale relativ zum Basiselement in Längsrichtung um eine Querachse in einem Bereich zwischen 0° und 120° neigbar und/oder in Querrichtung um eine Längsachse in einem Bereich zwischen 0° und 5° neig- oder rollbar und/oder um eine Hochachse des Schwebesitzes maximal bis zu 20° dreh- oder schwenkbar. Beispielsweise nimmt die Sitzschale in einer Design- oder Sitzposition eine Stellung ein, in welcher die Sitzschale in Längsrichtung nach vorne und somit in Fahrt-/Sichtrichtung ausgerichtet ist. Diese Stellung wird auch als 0°-Position in Bezug auf die Hochachse (Z-Achse) und Längsachse (X-Achse) bezeichnet. In dieser Design- oder Sitzposition ist die Sitzschale zum verbesserten Sitzkomfort um die Querachse (Y-Achse) beispielsweise 25° nach hinten geneigt. Die Sitzschale ist mittels des Gleitlagers gegenüber der Design- oder Sitzposition beispielsweise um die Querachse bis zu 10° nach vorne und bis zu 20° nach hinten neigbar. Maximal ist die Sitzschale um die Querachse bis zu 120° neigbar. Um die Hochachse ist die Sitzschale insbesondere maximal bis zu 280° drehbar, insbesondere um -90° bis zu +190° in Bezug auf die Design- oder Sitzposition drehbar.

In einer möglichen Ausführungsform ist das Gleitlager als ein Schalengleitlager oder Mehrgleitflächenlager ausgebildet. Beispielsweise umfasst das Gleitlager mehrere separate Gleitflächen, die derart angeordnet und/oder geformt sind, dass ein kugelschalenförmiges Gleitlager zwischen Basiselement und Sitzschale gebildet ist. Dabei umfasst beispielsweise das Basiselement mehrere partielle Gleitflächen, die kugelschalenförmig geformt und verteilt am Basiselement angeordnet sind. Die Sitzschale weist eine einzelne oder mehrere, zu diesen partiellen Gleitflächen korrespondierende, kugelschalenförmige Gleitfläche/n auf. Alternativ können Basiselement und Sitzschale jeweils eine einzelne Gleitfläche aufweisen, die zueinander korrespondierend, beispielsweise kugelschalenförmig, ausgebildet sind.

Die Sitzschale ist somit im entriegelten Zustand in mehreren Freiheitsgraden, insbesondere in allen Rotationsfreiheitsgraden bewegbar, insbesondere schwenk- oder neigbar. Im verriegelten Zustand ist die Sitzschale blockiert.

Die Aufgabe wird erfindungsgemäß mit einem Schwebesitz gelöst, umfassend ein Basis- oder Trägerelement, ein optionales Adapterelement und eine Sitzschale, wobei ein Verriegelungsmechanismus zur Ver- und/oder Entriegelung einer Verstellung der Sitzschale relativ zum Basiselement vorgesehen ist, wobei der Verriegelungsmechanismus mittels eines Auslösemechanismus betätigbar ist, und wobei der Auslösemechanismus eingerichtet ist, den Verriegelungsmechanismus im Normalbetrieb zur Ent- oder Verriegelung der Verstellung der Sitzschale relativ zum Basiselement manuell oder elektrisch zu betätigen und optional oder zusätzlich im Kollisionsfall automatisch zu betätigen, um die Verstellung der Sitzschale relativ zum Basiselement automatisch zu verriegeln.

Der Verriegelungsmechanismus ist insbesondere im Normalbetrieb als eine kontinuierliche oder stufenlose Verriegelung oder Arretierung ausgebildet.

Insbesondere ist der Verriegelungsmechanismus im Normalbetrieb mittels des Auslösemechanismus kontinuierlich oder stufenlos, beispielsweise mittels eines elektrischen Motors, betätigbar, insbesondere zwischen einer entriegelten Stellung und einer verriegelten Stellung oder umgekehrt bewegbar.

Hierzu weist der Verriegelungsmechanismus beispielsweise eine elektromechanische Antriebseinheit auf, die mit einer Bremseinheit, beispielsweise einer Keilbremseinheit, zusammenwirkt. Dabei ist die elektromechanische Antriebseinheit ausgebildet, eine Verstellung der Sitzschale relativ zum Basiselement in Längs- und in Hochrichtung zu bremsen und/oder zu ver- oder zu entriegeln. Die Brems-, insbesondere eine Keilbremseinheit, ist eingerichtet, eine Verstellung der Sitzschale relativ zum Basiselement in Quer- und in Hochrichtung zu bremsen und/oder zu stoppen, insbesondere zu ver- oder zu entriegeln.

In einer möglichen Ausführungsform ist die elektromechanische Antriebseinheit als eine Motor-Getriebe-Einheit, beispielsweise ein Antriebsmotor in Kombination mit einem Spindelantrieb, ausgebildet.

Die Bremseinheit umfasst beispielsweise gegenläufige Brems-, Keil- und/oder Reibflächen. Beispielsweise weist eine Bremsfläche eine sphärische Form auf, welche auf eine dazu gegenläufig geneigte Brems-, Gleit- oder Führungsfläche gleitet und dadurch abbremst.

Im Kollisionsfall ist der Verriegelungsmechanismus mittels des Auslösemechanismus automatisch sowie kontinuierlich oder stufenlos, beispielsweise mittels eines pyrotechnischen Treibsatzes, betätigbar, insbesondere in eine verriegelte Stellung bewegbar.

Der Schwebesitz ist derart ausgebildet, dass eine Position der Sitzschale relativ zum Basiselement in mindestens zwei oder mehreren Freiheitsgraden, insbesondere in mindestens einem oder mehreren Translationsfreiheitsgrad/en, wie beispielsweise in Hochrichtung oder Längsrichtung, und/oder in mindestens einem oder mehreren Rotationsfreiheitsgrad/en, beispielsweise in vertikale Drehrichtung oder horizontale Drehrichtung um eine Hoch-, Längs- und/oder Querachse, einstellbar ist. Dazu ist beispielsweise ein Verstellmechanismus vorgesehen. Durch die Einstellung der Position der Sitzschale in mehr als zwei Freiheitsgraden, insbesondere Rotationsfreiheitsgraden, wird der Eindruck einer schwebenden oder gleitenden Sitzschale erzeugt, welche einer Bewegung eines Benutzers auf dem Sitz folgt. Der Verstellmechanismus ist beispielsweise in Art eines Gelenk- oder Gleitlagers, insbesondere eines Kugelgelenks oder Kugellagers, ausgebildet. Beispielsweise weist das Gelenk- oder Gleitlager eine sphärische Gleitfläche auf, in welcher eine sphärische Lauffläche gleitet. Dabei ist die sphärische Gleitfläche am Basiselement in Richtung der Sitzschale ausgebildet, wobei die Sitzschale selbst und/oder das Adapterelement eine zu der sphärischen Gleitfläche am Basiselement korrespondierende Lauffläche aufweist oder umgekehrt.

Beispielsweise weist die sphärische Gleitfläche eine konkave Form und die sphärische Lauffläche eine dazu korrespondierende konvexe Form auf.

Auch kann das Gelenk- oder Gleitlager als ein Pendel- oder Schalengleitlager ausgebildet sein. Dabei weist das Pendellager beispielsweise eine Pendel- oder Schwing- oder Gleitschale oder Gelenkpfanne auf, in welcher ein Gelenkkopf oder eine kugelförmige Schale gleitet. Die Sitzschale ist somit im entriegelten Zustand in mehreren Freiheitsgraden bewegbar, insbesondere schwenk- oder neigbar. Im verriegelten Zustand ist die Sitzschale blockiert.

Der Verriegelungsmechanismus ist insbesondere als eine mechanische Verbindung, beispielsweise eine Rastverbindung, eine Steckverbindung oder eine andere geeignete Formschluss- oder Kraftschluss-, insbesondere Reibschlussverbindung, ausgebildet. Beispielsweise ist der Verriegelungs- und/oder Bremsmechanismus als eine Steck- und/oder Rastverbindung ausgebildet. Der Verriegelungs- und/oder Bremsmechanismus kann alternativ oder zusätzlich als eine Kraft-, insbesondere Reibschlussverbindung ausgebildet sein.

In einer möglichen Ausführungsform umfasst der Auslösemechanismus einen Elektromotor oder Stellmotor zur elektrischen Betätigung des Verriegelungsmechanismus des Sitzes. Gemäß einem weiteren Aspekt treibt der Elektromotor zur Betätigung des Verriegelungsmechanismus direkt ein Verriegelungselement oder indirekt über eine Gewindestange das Verriegelungselement an, welcher beispielsweise als ein Schlitten, insbesondere eine Keil- oder Rastplatte, ausgebildet ist, so dass dieses Verriegelungselement je nach Bewegungsrichtung in einen oder aus einem Verriegelungseingriff gelangt.

In einer weiteren Ausführungsform umfasst der Auslösemechanismus einen pyrotechnischen Treibsatz, um den Verriegelungsmechanismus automatisch auszulösen und in eine Verriegelungsposition zu stellen.

In einer Weiterbildung ist der pyrotechnische Treibsatz als ein pyrotechnischer Aktuator ausgebildet, der einen Kolben vortreibt, welcher ein Verriegelungselement, insbesondere eine Keil- oder Rastplatte, bewegt, so dass dieses Verriegelungselement in eine Verriegelungsposition gestellt ist.

Die mit der Erfindung erzielten Vorteile bestehen insbesondere darin, dass im Normalbetrieb mittels nur einer Bedienung die Sitzschale schwenkbar, insbesondere bewegbar ist, und im Kollisionsfall die Sitzschale im Millisekundenbereich gegen Bewegung verriegelbar ist.

Ausführungsbeispiele der Erfindung werden anhand von Zeichnungen näher erläutert. Dabei zeigen:
- Figuren 1A und 1B: schematisch in verschiedenen perspektivischen Darstellungen einen Schwenk- oder Schwebesitz,
- Fig. 1C bis 1E: schematisch in perspektivischer Darstellung eine Ausführungsform für einen Schwebesitz ohne Polsterung mit kugelschalenförmiger Sitzschale und einem Adapterelement mit mehreren Gleitflächen,
- Figur 2: schematisch in Schnittdarstellung einen Verstellmechanismus in Art eines Gelenklagers, insbesondere eines Kugelgelenk- oder Gleitlagers für einen Schwenk- oder Schwebesitz,
- Figuren 3 bis 5: schematisch in perspektivischer Darstellung einen Schwenk- oder Schwebesitz in verschiedenen Positionen und mit verschiedenen einstellbaren Freiheitsgraden,
- Figur 6: schematisch in Explosionsdarstellung einen Schwenk- oder Schwebesitz,
- Figuren 7A bis 7C: schematisch in perspektivischer Darstellung einen Verriegelungsmechanismus für einen Schwenk- oder Schwebesitz im Normalbetrieb in entriegelter Stellung,
- Figuren 8A bis 8C: schematisch in perspektivischer Darstellung und teilweise aufgeschnittener Darstellung einen Verriegelungsmechanismus für einen Schwenk- oder Schwebesitz in entriegelter Stellung und mit einem Auslösemechanismus, umfassend einen pyrotechnischen Treibsatz für eine automatische Auslösung des Verriegelungsmechanismus in einem Kollisionsfall,
- Figuren 9A bis 9D: schematisch in perspektivischer und teilweise aufgeschnittener Darstellung einen Verriegelungsmechanismus für einen Schwenk- oder Schwebesitz in einer durch einen Kollisionsfall ausgelösten verriegelten Stellung,
- Figur 10: schematisch in Explosionsdarstellung ein Ausführungsbeispiel für einen pyrotechnischen Treibsatz mit Kolben für einen Auslösemechanismus,
- Figur 11: schematisch in Z-X-Schnittdarstellung einen Verriegelungsmechanismus in Wirkzusammenhang mit einem Teil einer Bremseinheit zum Bremsen und/oder Verriegeln der Bewegung eines Schwebesitzes,
- Figur 12: schematisch in Z-Y-Schnittdarstellung einen Verriegelungsmechanismus in Wirkzusammenhang mit einem Teil einer Bremseinheit zum Bremsen und/oder Verriegeln der Bewegung eines Schwebesitzes, und
- Figur 13: schematisch in Explosionsdarstellung Komponenten eines kombinierten Verstell- und Verriegelungsmechanismus mit integrierter Keilbremseinheit für einen Schwebesitz.

Einander entsprechende Teile sind in allen Figuren mit den gleichen Bezugszeichen versehen.

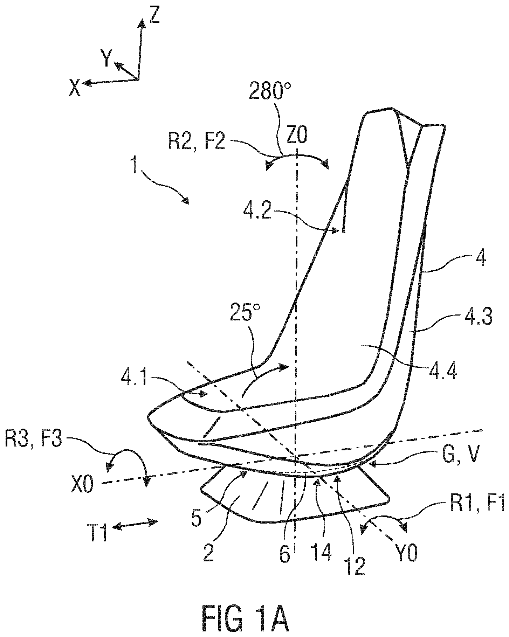

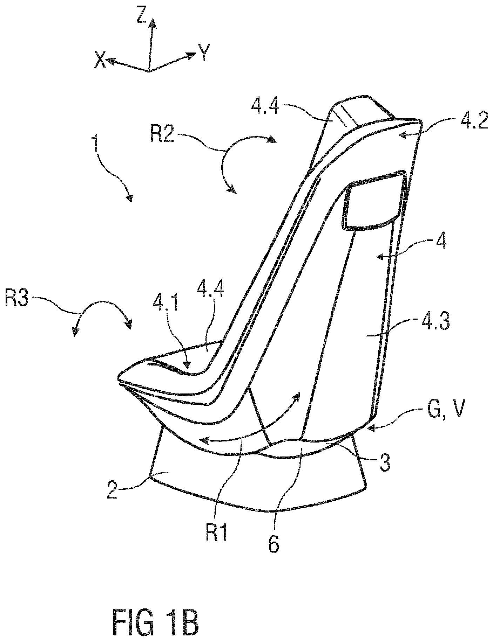

**Figuren 1A** **und** **1B** zeigen schematisch in zwei perspektivischen Darstellungen eine von schräg vorne und eine von schräg hinten einen Schwenk- oder Schwebesitz 1, insbesondere einen Fahrzeugsitz, der insbesondere in mehreren Freiheitsgraden F1 bis F3 bewegbar, insbesondere schwenk-, dreh- und/oder neigbar ist. Der Schwebesitz 1 ist insbesondere in einem Fahrzeug vorgesehen und dort an einem Fahrzeugboden in nicht näher dargestellter Art und Weise befestigt.

Der Schwebesitz 1 umfasst zumindest ein Träger- oder Basiselement 2, ein optionales Adapterelement 3 und eine Sitzschale 4 **(****Figur 1B****).** Anstelle des optionalen Adapterelements 3 kann die Sitzschale 4 entsprechend geformt und ausgebildet sein und direkt am Basiselement 2 angeordnet und gelagert sein **(****Figur 1A****).** In einer weiteren Alternative (nicht dargestellt) kann das Adapterelement 3 Teil des Bodens der Sitzschale 4 sein.

Die Sitzschale 4 kann darüber hinaus einstückig aus einem Sitzteil 4.1 und einer Sitzlehne 4.2 gebildet sein. Alternativ kann die Sitzschale 4 aus einem separaten Sitzteil 4.1 und einer an diesem neigbar angeordneten Sitzlehne 4.2 gebildet sein (nicht näher dargestellt). Die Sitzschale 4 kann ferner aus einem Träger 4.3, insbesondere einer Hartschaumschale oder Verbundstoff-Schale, insbesondere aus einem faserverstärktem Kunststoff, und einem auf diesem angeordnetem Polsterelement 4.4, insbesondere einem Schaumpolster mit oder ohne Bezug, gebildet sein.

Zwischen Sitzschale 4 und Basiselement 2 **(****Figur 1A****)** und/oder zwischen Adapterelement 3 und Basiselement 2 **(****Figur 1B****)** ist jeweils ein Verstellmechanismus 6 in Art eines Gelenk- oder Gleitlagers G ausgebildet. Damit ist die Sitzschale 4 direkt bzw. indirekt über das Adapterelement 3 gleitend, insbesondere neig-, dreh- und/oder schwenkbar, am Basiselement 2 gelagert. Mittels des Verstellmechanismus 6 ist die Sitzschale 4 relativ zum Basiselement 2 zur Verstellung V in zumindest zwei oder allen drei Rotationsfreiheitsgraden R1, R2 und/oder R3 gleitend gelagert.

Beispielsweise nimmt die Sitzschale 4 in einer Design- oder Sitzposition P1 eine Stellung ein, in welcher die Sitzschale 4 in Längsrichtung X nach vorne und somit in Fahrt-/Sichtrichtung ausgerichtet ist. Diese Sitzposition P1 wird auch als 0°-Position in Bezug auf die Hochachse Z0 und Längsachse X0 bezeichnet. In dieser Sitzposition P1 ist die Sitzschale 4 zum verbesserten Sitzkomfort um die Querachse Y0 beispielsweise um 25° nach hinten geneigt. Dabei ist das Gleitlager G derart eingerichtet, dass die Sitzschale 4 gegenüber der Design- oder Sitzposition P1 beispielsweise um die Querachse Y0 bis zu 10° nach vorne und bis zu 20° nach hinten neigbar ist und maximal bis zu 120° nach hinten neigbar und/oder um die Hochachse Z0 insbesondere maximal bis zu 280° drehbar, insbesondere um -90° bis zu +190° drehbar.

Der Verstellmechanismus 6 ist beispielsweise in Art eines Schalengleitlagers 6.1 ausgebildet. Auch kann der Verstellmechanismus 6 in Art eines Kugelgelenks ausgebildet sein.

In einer weiteren Ausführungsform des Schwebesitzes 1 umfasst dieser ein Träger- oder Basiselement 2, ein Adapterelement 3 und eine Sitzschale 4, wobei zumindest zwischen Sitzschale 4 und Adapterelement 3 sowie zwischen Adapterelement 3 und Basiselement 2 jeweils ein Verstellmechanismus 6 in Art eines Gleitlagers G, insbesondere eines Kugelgelenks oder Schalengleitlagers, gebildet und die Sitzschale 4 mittels eines solchen mehrfachen Verstellmechanismus 6 in zumindest zwei oder allen drei Rotationsfreiheitsgraden R1, R2 und/oder R3 relativ zum Basiselement 2 verstellbar ist (nicht näher dargestellt).

Beispielsweise ist die Sitzschale 4 relativ zum Basiselement 2 um eine Querachse Y0 von einer Normalstellung in eine Komfortstellung in einem Bereich zwischen 0° und 120° neigbar und/oder um eine Längsachse X0 in einem Bereich zwischen 0° und 5° neigbar und/oder um eine Hochachse Z0 maximal bis zu 20° drehbar.

Mit anderen Worten: Der Schwebesitz 1 ist derart ausgebildet, dass eine Position der Sitzschale 4 relativ zum Basiselement 2 in mindestens zwei oder mehreren Freiheitsgraden F1 bis F3, insbesondere in mindestens einem oder mehreren Translationsfreiheitsgraden T1, T2, wie beispielsweise in Hochrichtung Z und/oder Längsrichtung X, und/oder in mindestens einem oder mehreren der Rotationsfreiheitsgrade R1, R2, R3 einstellbar ist. Dazu ist der Verstellmechanismus 6 vorgesehen. Durch die Einstellung der Position der Sitzschale 4 in mehr als zwei Freiheitsgraden F1 bis F3 wird der Eindruck einer schwebenden oder gleitenden Sitzschale 4 erzeugt, welche einer Bewegung eines Benutzers auf dem Schwebesitz 1 folgt.

Zur Verriegelung der Sitzschale 4 in einer eingestellten Position ist ein Verriegelungsmechanismus 5 vorgesehen, der die Sitzschale 4 in der eingestellten Position relativ zum Basiselement 2 fixiert. Der Verriegelungsmechanismus 5 wird nachfolgend anhand von Beispielen näher beschrieben. In einer möglichen Ausführungsform kann der Verriegelungsmechanismus 5 im Adapterelement 3 angeordnet sein.

Beispielsweise umfasst der Verriegelungsmechanismus 5 eine elektromechanische Antriebseinheit 12, die mit einer Bremseinheit 14 zusammenwirkt, die zwischen Sitzschale 4 und Basiselement 2 eingreift.

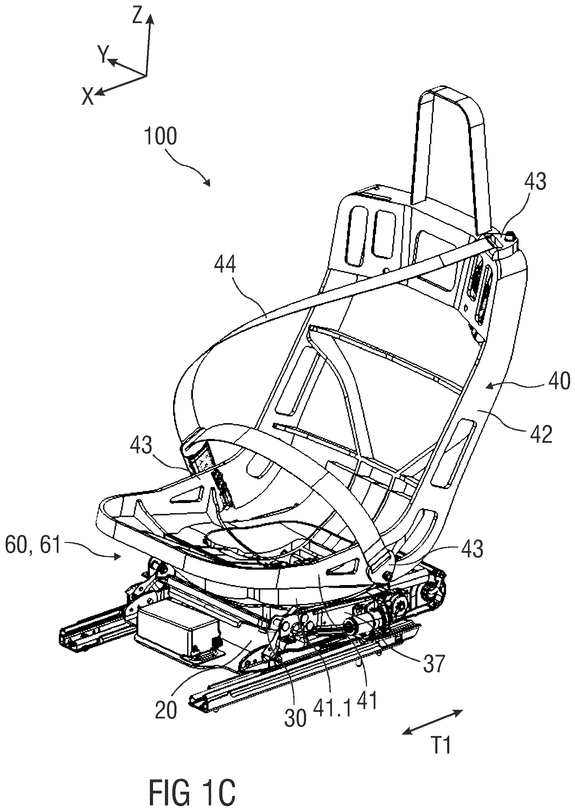

**Figuren 1C bis 1E** zeigen schematisch in perspektivischer Darstellung eine weitere beispielhafte Ausführungsform für einen Schwebesitz 100, eine Polsterung mit einer Sitzschale 40 und einem Adapterelement 30 zwischen denen ein Mehrgleitflächenlager 61 als Verstellmechanismus 60 (dargestellt in **Figur 1C****)** ausgebildet ist.

Die weiteren, in **Figuren 1C bis 1E** nicht näher gezeigten, Komponenten zur variablen Verstellung des Schwebesitzes 100 relativ zu einem Fahrzeugboden in mindestens zwei Rotationsfreiheitsgraden R1 bis R3, wie Basiselement 2, Verriegelungsmechanismus 5, Antriebseinheit 12, Bremseinheit 14, entsprechen den in den **Figuren 1A bis 1B** **und** **2 bis 11** dargestellten und vorgehend oder nachfolgend entsprechend beschriebenen Komponenten.

Das Adapterelement 30 ist mittels Befestigungsbolzen 35 und/oder Befestigungsflanschen 36 am Basiselement 20, insbesondere an einem seitlichen Sitzrahmen 37 befestigt.

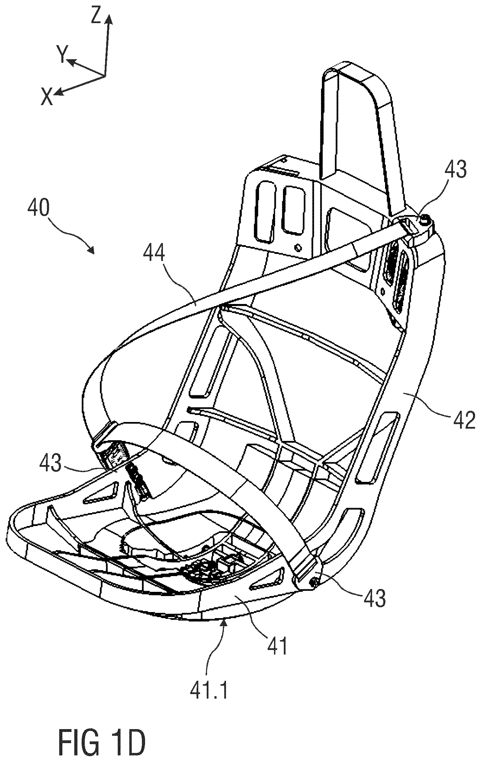

**Figuren 1C** **und** **1D** zeigen die Sitzschale 40 mit einem Sitzteil 41, welches in Richtung des Adapterelements 30 eine kugelschalenförmige Gleitfläche 41.1 aufweist. Die Gleitfläche 41.1 ist kugelschalenförmig ausgebildet. Beispielsweise kann die Gleitfläche 41.1 in mehrere Teilgleitflächen unterteilt sein. Alternativ kann diese als eine einzelne konkav geformte Fläche oder eine konkav geformte Oberfläche mit mehreren Teilgleitflächen ausgebildet sein.

Die Sitzschale 40 ist als eine einteilige Rahmenschale 42, insbesondere eine Spritzgussrahmenschale oder eine in einem anderen geeigneten Formverfahren hergestellte Schale, ausgebildet.

Um sowohl eine variable Verstellung des Schwebesitzes 100 relativ zu einem Fahrzeugboden in mindestens zwei Rotationsfreiheitsgraden R1 bis R3 als auch eine hinreichende Sicherheit für einen Benutzer des Schwebesitzes 100 zu ermöglichen, sind an der Rahmenschale 42 selbst eine entsprechende Anzahl von Anbindungspunkten 43 für einen Sicherheitsgurt 44, beispielsweise von drei Anbindungspunkten 43 für einen Dreipunktgurt, angeordnet.

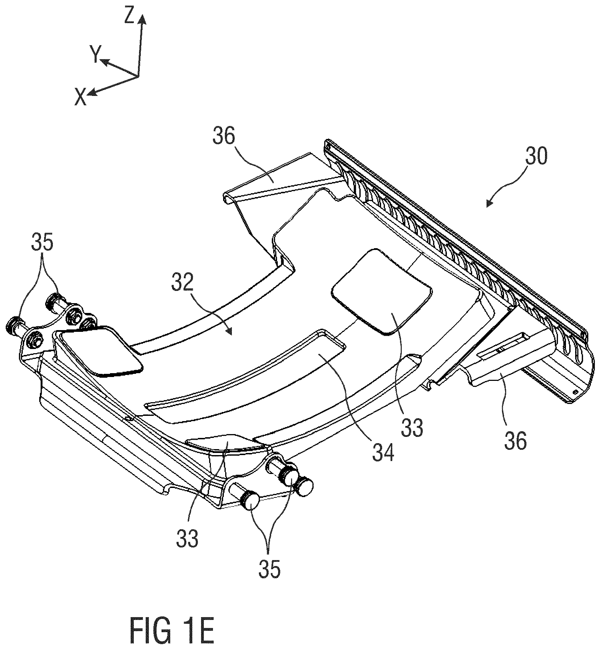

**Figur 1E** zeigt ein Ausführungsbeispiel für das Adapterelement 30. Das Adapterelement 30 weist eine konkave Oberflächenform 32 auf, welche in Richtung der Sitzschale 40, insbesondere des Sitzteils 41 weist. Die konkave Oberflächenform 32 weist mehrere Teilgleitflächen 33 auf. Die Teilgleitflächen 33 sind kugelschalenförmig oder konkav geformt. Die Teilgleitflächen 33 bilden Punktlagerungen für die korrespondierende Gleitfläche 41.1 des Sitzteils 41 oder deren, nicht dargestellten Teilgleitflächen. Die Teilgleitflächen 33 sind aus einem anderen Material, insbesondere einem geeigneten Gleitmaterial, wie zum Beispiel einem Kunststoff, Graphit, Carbon, EPDM, als das Material des Adapterelements 30 gefertigt. Das Gleitmaterial weist insbesondere einen geringen Gleitreibungskoeffizienten, eine hohe Verschleißfestigkeit und eine hohe mechanische Belastbarkeit sowie Formstabilität und Temperaturbeständigkeit auf. Auch können die einander gegenüberliegenden, das Gleitlager G bildenden Flächen - Teilgleitflächen 33 des Adapterelements 30 und Gleitfläche 41.1 der Sitzschale 40 - aus verschiedenen Materialien gebildet sein. Beispielsweise ist eines der Flächen aus einem besonders harten Material mit hohen E-Modul und das andere aus einem weichen Material mit geringem E-Modul gebildet.

Die Teilgleitflächen 33 sind voneinander beabstandet auf dem Adapterelement 30 in Richtung der Sitzschale 40 weisend aufgebracht.

Zusätzlich weist das Adapterelement 30 eine Ausnehmung 34 auf, durch welche die Bremseinheit 14 und der Verriegelungsmechanismus 5 zum Bremsen der Bewegung der Sitzschale 40 relativ zum Adapterelement 30 bis hin zum Verriegeln von Sitzschale 40 und Adapterelement 30 und somit der Bewegung bzw. Positionierung des Schwebesitzes 100 relativ zum Basiselement 20 in einer eingestellten Position eingreift. Die Bremseinheit 14 und der Verriegelungsmechanismus 5 werden nachfolgend näher beschrieben.

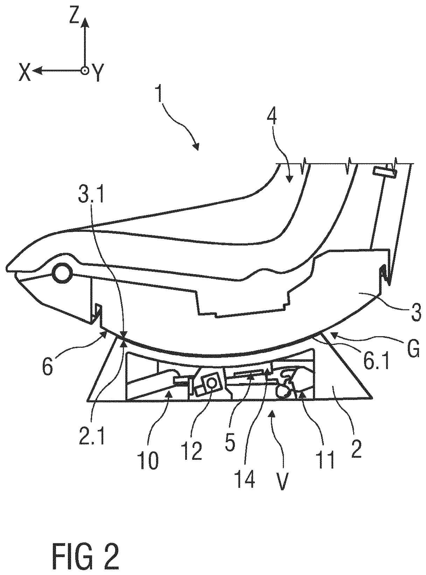

**Figur 2** zeigt schematisch in Schnittdarstellung ein Ausführungsbeispiel für einen Verstellmechanismus 6 in Art eines Gleitlagers G mit einem Schalengleitlager 6.1 für den Schwenk- oder Schwebesitz 1. Der Schwebesitz 1 umfasst das Basiselement 2 zur Befestigung an einer Karosserie in einem Fahrzeug.

Zur Ver- oder Entriegelung des Verstellmechanismus 6 und damit der Verstellung des Schwebesitzes 1 umfasst dieser einen Verriegelungsmechanismus 5.

Das Basiselement 2 ist derart ausgestaltet, dass es weitere herkömmliche Funktionselemente, wie eine Längsverstelleinheit 10 und/oder eine Höhenverstelleinheit 11 mit einer zugehörigen Antriebseinheit 12, zur Verstellung des Schwebesitzes 1 in einen oder mehreren Translationsfreiheitsgraden T1 und T2 in Längsrichtung X bzw. Hochrichtung Z aufnehmen kann.

Beispielsweise weist das Gleit- oder Gelenklager G eine sphärische Gleitfläche 2.1 auf, in welcher eine sphärische Lauffläche 3.1 gleitet.

Dabei ist die sphärische Gleitfläche 2.1 am Basiselement 2 in Richtung der Sitzschale 4 ausgebildet. Im gezeigten Ausführungsbeispiel ist die sphärische Gegen- oder Lauffläche 3.1 am Adapterelement 3 ausgebildet.

Alternativ kann die Sitzschale 4 selbst eine zu der sphärischen Gleitfläche 2.1 des Basiselements 2 korrespondierende Lauffläche aufweisen. Beispielsweise weist die sphärische Gleitfläche 2.1 eine konkave Form und die sphärische Lauffläche 3.1 eine dazu korrespondierende konvexe Form auf.

Auch kann das Schalengleitlager 6.1 als ein Gelenklager G, ein Kugelgelenk oder ein Pendellager ausgebildet sein. Dabei weist das Pendellager beispielsweise eine Pendel- oder Schwingschale oder Gelenkpfanne auf, in welcher ein Gelenkkopf oder eine kugelförmige Schale abwälzt.

Die Sitzschale 4 ist im entriegelten Zustand des Verriegelungsmechanismus 5 relativ zum Basiselement 2 in mehreren Freiheitsgraden F1 bis F3, insbesondere in allen Rotationsfreiheitsgraden R1 bis R3 bewegbar, insbesondere schwenk- oder neigbar. Im verriegelten Zustand ist die Sitzschale 4 gegenüber dem Basiselement 2 blockiert und nicht verstellbar.

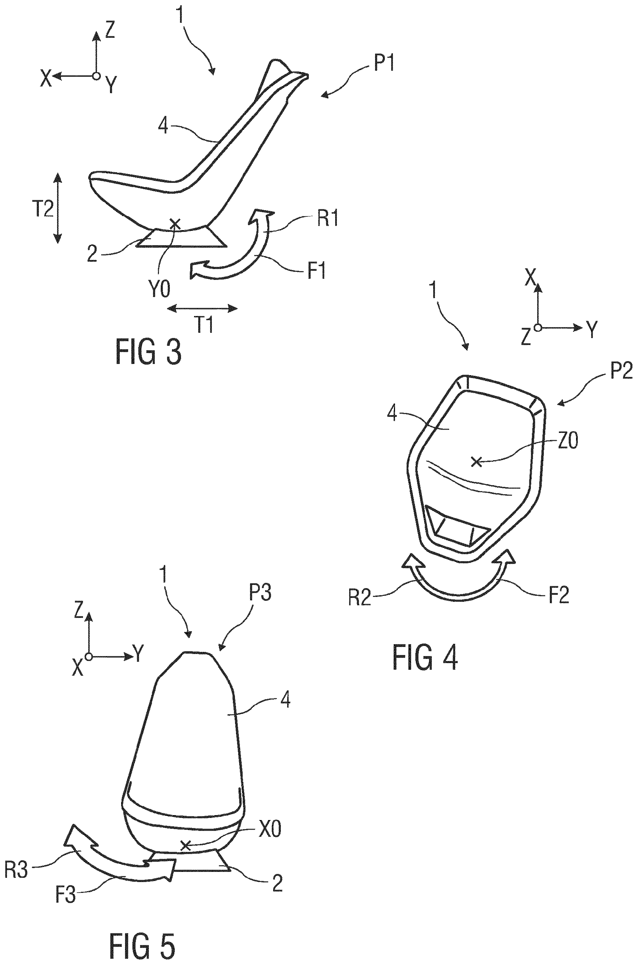

**Figuren 3 bis 5** zeigen schematisch in perspektivischer Darstellung den Schwebesitz 1 in verschiedenen Positionen P1 bis P3 und mit verschiedenen einstellbaren Freiheitsgraden F1 bis F3, insbesondere den Rotationsfreiheitsgraden R1 bis R3.

Der Schwebesitz 1 kann beispielsweise in mindestens einem oder mehreren Translationsfreiheitsgraden T1, T2, wie beispielsweise in Hochrichtung Z, in Längsrichtung X oder in Querrichtung Y, und/oder in mindestens einem oder mehreren Rotationsfreiheitsgraden R1 bis R3, beispielsweise in vertikale Drehrichtung oder horizontale Drehrichtung um eine Hoch-, Längs- und/oder Querachse, einstellbar sein. Dazu ist beispielsweise der Verstellmechanismus 6 vorgesehen. Durch die Einstellung einer der Positionen P1 bis P3 der Sitzschale 4 in mehr als zwei Freiheitsgraden F1 bis F3, insbesondere Rotationsgraden R1 bis R3, wird der Eindruck einer schwebenden Sitzschale 4 erzeugt, welche einer Bewegung eines Benutzers auf dem Schwebesitz 1 folgt.

**Figur 3** zeigt den Schwebesitz 1 in einer leicht in Längsrichtung X nach hinten geneigten oder geschwenkten Position P1, in welcher die Sitzschale 4 um die Querachse Y0 zwischen einer Normalstellung und einer Komfortstellung, insbesondere einer Sitz- oder Liegekomfortstellung, in einem Bereich von 0° bis maximal 180° gegenüber der Normalstellung, insbesondere einer weitgehend senkrechten Stellung der Sitzlehne 4.2, geneigt werden kann.

**Figur 4** zeigt den Schwebesitz 1 in einer um eine Hochachse Z0 gedrehten Position P2 gegenüber einer Normalstellung, in welcher der Schwebesitz 1 beispielsweise in einem Fahrzeug in Fahrtrichtung ausgerichtet ist. Dabei ist der Verstellmechanismus 6 eingerichtet, den Schwebesitz 1 zwischen der Normalstellung und einer gedrehten Stellung in einem Bereich bis zu maximal 20° zu drehen oder zu schwenken.

**Figur 5** zeigt den Schwebesitz 1 in einer leicht zur Seite um die Längsachse X0 geneigten oder geschwenkten Position P3, in welcher die Sitzschale 4 um die Längsachse X0 zwischen einer Normalstellung und einer zur Seite geneigten Stellung in einem Bereich bis zu maximal 5° gegenüber der Normalstellung, insbesondere einer weitgehend waagerechten Stellung des Sitzteils 4.1, geneigt oder gerollt werden kann.

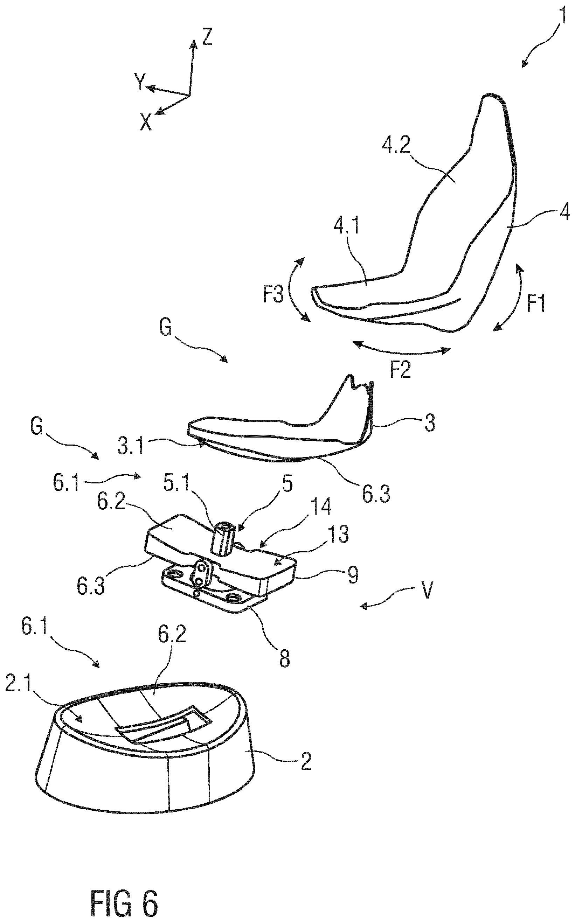

**Figur 6** zeigt schematisch in Explosionsdarstellung den Schwenk- oder Schwebesitz 1, umfassend zumindest das Basiselement 2, das Adapterelement 3 und die Sitzschale 4. Zwischen dem Basiselement 2 und dem Adapterelement 3 ist der Verriegelungsmechanismus 5 mit integrierter Bremseinheit 14 angeordnet. Die Bremseinheit 14 ist beispielsweise als eine Keilbremseinheit 13 ausgebildet, die ein Bremselement 9, insbesondere eine Bremsschale oder -platte, umfassen kann.

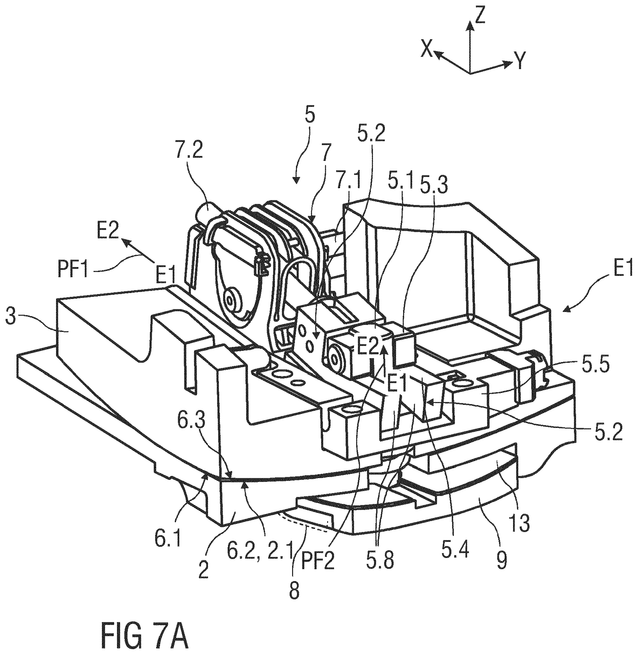

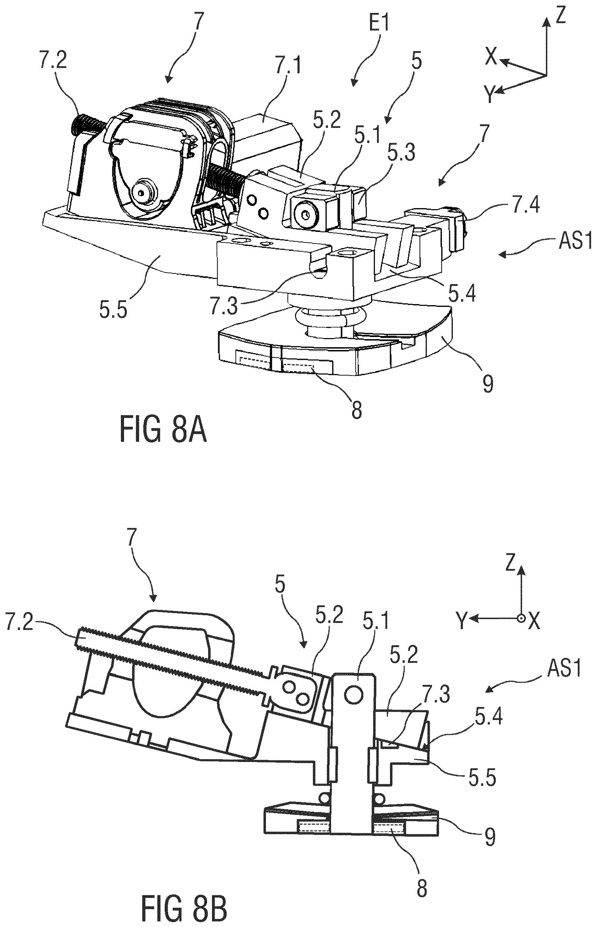

Der Verriegelungsmechanismus 5 ist mittels eines Auslösemechanismus 7 (dargestellt in **Figuren 7A bis 10****)** betätigbar, insbesondere ver- oder entriegelbar. Dabei kann der Auslösemechanismus 7 beispielsweise für einen normale Verstellung der Sitzschale 4 durch einen Benutzer und somit im Normalbetrieb elektrisch ausgebildet sein und einen Stellmotor 7.1 umfassen (dargestellt in **Figuren 7A bis 7C****).** Für eine automatische Verriegelung der Sitzschale 4 in einem Kollisionsfall des Fahrzeugs umfasst der Auslösemechanismus 7 zusätzlich einen pyrotechnischen Treibsatz 7.4, mittels welchen die Sitzschale 4 automatisch innerhalb von wenigen Millisekunden, insbesondere weniger als 10 ms, gegen eine Bewegung verriegelt wird (dargestellt in den **Figuren 8A bis 10**).

Beispielsweise ist der Auslösemechanismus 7 in Wirkzusammenhang mit dem Verriegelungsmechanismus 5 eingerichtet, im Normalbetrieb eine Verstellung der Sitzschale 4 elektrisch zu ver- oder entriegeln (beispielhaft dargestellt in **Figuren 7A bis 7C**) und optional im Kollisionsfall die Verstellung der Sitzschale 4 reversibel zu verriegeln (beispielhaft dargestellt in **Figuren 8A bis 10**).

Mittels des Verriegelungsmechanismus 5 ist die Sitzschale 4, insbesondere deren Verstellmechanismus 6, vom Basiselement 2 entkoppelbar und gegen eine Verstellung relativ zum Basiselement 2 blockiert oder fixiert.

Zur Befestigung des Verstellmechanismus 6 ist ein Befestigungselement 8, beispielsweise eine Befestigungsplatte oder -fuß, vorgesehen. Das Befestigungselement 8 ist im oder am Basiselement 2 befestigbar.

Der Schwebesitz 1 ist beispielsweise derart ausgebildet, dass eine Position der Sitzschale 4 in mindestens zwei oder mehreren Freiheitsgraden F1 bis F3 einstellbar ist.

Dabei kann der Schwebesitz 1 optional mit einem Schienensystem für eine Längsverstelleinheit 10 versehen sein, um beispielsweise in Längsrichtung X und damit in Translationsrichtung verstellt werden zu können.

Der Verstellmechanismus 6 ist zur Verstellung der Sitzschale 4 in den Rotationsfreiheitsgraden R1 bis R3, beispielsweise in Art eines Schalengleitlagers 6.1 oder Gleit- oder Gelenklagers G ausgebildet. Beispielsweise weist das Schalengleitlager 6.1 eine sphärische Gleitfläche 6.2 auf, in welcher eine Lauffläche 6.3 gleitet. Dabei kann die sphärische Gleitfläche 6.2 am Basiselement 2 in Richtung der Sitzschale 4 ausgebildet sein, wobei die Sitzschale 4 selbst (nicht dargestellt) oder das Adapterelement 3 eine zu der sphärischen Gleitfläche 6.2 des Basiselements 2 korrespondierende Lauffläche 6.3 aufweist.

Zusätzlich kann ein separates Bremselement 9, insbesondere eine Reib-/Bremsplatte- oder Reib-/Bremsschale oder Skateplatte, zwischen Adapterelement 3 und Basiselement 2 vorgesehen sein. Dabei kann das Bremselement 9 in Richtung des Adapterelements 3 eine Bremsfläche, die zu der Lauffläche 3.1 des Adapterelements 3 korrespondiert, und in Richtung des Basiselements 2 eine Lauffläche 6.3 aufweisen, die zu der Gleitfläche 2.1 des Basiselements 2 korrespondiert.

In einer weiteren Ausführungsform kann das Gleitlager G und insbesondere das jeweilige Schalengleitlager 6.1 zwischen Basiselement 2 und Bremselement 9 sowie zwischen Bremselement 9 und Adapterelement 3 und zwischen Adapterelement 3 und Sitzschale 4 als ein Pendellager ausgebildet sein. Dabei weist das Pendellager beispielsweise eine Pendel- oder Schwingschale mit einer entsprechenden Gleitfläche 6.2 auf. Die Sitzschale ist somit im entriegelten Zustand in mehreren Freiheitsgraden F1 bis F3 bewegbar, insbesondere schwenk- oder neigbar. Im verriegelten Zustand ist die Sitzschale 4 und damit der Schwebesitz 1 blockiert.

**Figur 7A** zeigt schematisch in perspektivischer Darstellung ein Ausführungsbeispiel für einen Verriegelungsmechanismus 5 für einen Schwebesitz 1 im Normalbetrieb in entriegelter Stellung E1 mit einem elektrischen Auslösemechanismus 7 zur Betätigung des Verriegelungsmechanismus 5 im Normalbetrieb, insbesondere wenn ein Benutzer eine Verstellung des Schwebesitzes 1 wünscht.

Der Verriegelungsmechanismus 5 ist insbesondere als eine mechanische Verbindung, beispielsweise eine Rastverbindung, eine Steckverbindung oder eine andere geeignete Formschluss- oder Kraftschlussverbindung, ausgebildet.

Beispielsweise umfasst der Verriegelungsmechanismus 5 ein Verriegelungselement, zum Beispiel einen Verriegelungsbolzen 5.1, der mittels eines Verstellelements 5.2 in eine verriegelte Stellung E2 stellbar ist oder gestellt wird. Hierzu ist der Verriegelungsbolzen 5.1 beispielsweise mittels eines Schlittens 5.3 auf dem Verstellelement 5.2 angeordnet und gelagert. Der Verriegelungsbolzen 5.1 ist beispielsweise mittels eines Stiftes am Schlitten 5.3 befestigt.

Der Schlitten 5.3 ist auf einer Führungsfläche 5.4 des Verstellelements 5.2, insbesondere einem Keilelement oder einer Keilplatte, beweglich angeordnet. Das Verstellelement 5.2 ist auf einer, insbesondere schrägen oder keilförmigen Führungsfläche 5.7 eines Träger- oder Grundelements 5.5 beweglich angeordnet, insbesondere geführt, beispielsweise ziehbar (im Normalbetrieb) oder schiebbar (im Kollisionsfall) angeordnet.

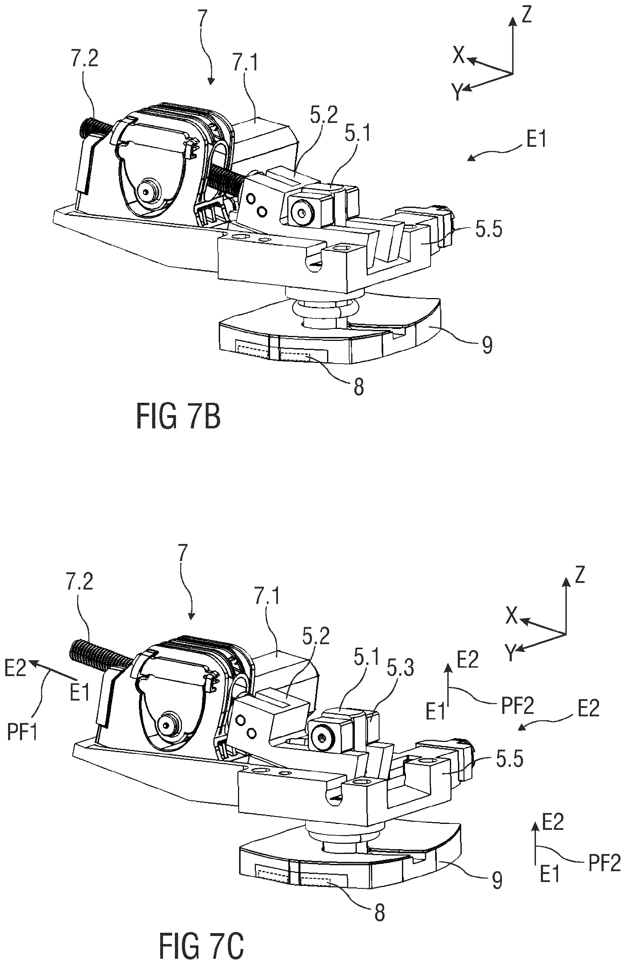

**Figur 7B** zeigt die entriegelte Stellung E1 des Schwebesitzes 1, in welcher das Verstellelement 5.2 und damit der Verriegelungsbolzen 5.1 in eine untere entriegelte Stellung E1 gestellt sind, in welcher die Sitzschale 4 frei bewegt werden kann. Dabei sind das Verstellelement 5.2 und damit der Verriegelungsbolzen 5.1 in eine untere entriegelte Stellung E1 in Bezug auf das Basiselement 2 gestellt, in welcher das Bremselement 9 und die Sitzschale 4 freigegeben, beispielsweise voneinander entkoppelt sind und keinen Kontakt haben, und nicht damit verriegelt sind, so dass die Sitzschale 4 relativ zum Basiselement 2 frei bewegt werden kann.

**Figur 7C** zeigt die verriegelte Stellung E2 des Schwebesitzes 1, in welcher das Verstellelement 5.2 und damit der Verriegelungsbolzen 5.1 in eine obere verriegelte Stellung E2 in Bezug auf das Basiselement 2 gestellt sind. Hierdurch sind das Bremselement 9 und die Sitzschale 4 relativ zum Basiselement 2 verriegelt, insbesondere mittels Reib- und Kraftschluss. Somit kann die Sitzschale 4 nicht frei bewegt werden. Zur Betätigung des Verriegelungsmechanismus 5, insbesondere des Verstellelements 5.2, im Normalbetrieb weist der Schwebesitz 1 einen Auslösemechanismus 7, insbesondere einen Stellmotor 7.1, auf.

Zur Verriegelung des Schwebesitzes 1 treibt der Stellmotor 7.1 eine Gewindestange 7.2, insbesondere eine Spindel, an, mittels welcher das Verstellelement 5.2, insbesondere eine Keilplatte, verstellt, beispielsweise in Richtung des Stellmotors 7.1 gemäß Pfeil PF1 von der entriegelten Stellung E1 in die verriegelte Stellung E2 bewegbar ist oder bewegt wird. Aufgrund einer Keilform 5.8 des Verstellelements 5.2 wird das Verriegelungselement, insbesondere der Verriegelungsbolzen 5.1 in die verriegelte Position oder Stellung E2 bewegt, insbesondere gehoben, wie dies anhand Pfeil PF2 gezeigt ist. Hierdurch werden das Befestigungselement 8 und das Bremselement 9 gehoben, sodass das Bremselement 9 und die Sitzschale 4 miteinander verriegelt sind und keine Relativbewegungen mehr möglich sind.

Das Verstellelement 5.2 ist beispielsweise als ein Führungs- oder Bremselement 9, insbesondere ein Schlitten 5.3 oder eine Keil- oder Rastplatte oder ein Bremskissen oder Bremsklotz, ausgebildet. Das Verstellelement 5.2 ist gleitend auf dem Grundelement 5.5 des Verriegelungsmechanismus 5 angeordnet und relativ zu diesem verstellbar, insbesondere verschiebbar.

Dabei kann das Verriegelungselement, wie der Verriegelungsbolzen 5.1, je nach Bewegungsrichtung gemäß Pfeil PF2 in einen oder aus einem Verriegelungseingriff in Bezug auf den Verstellmechanismus 6 und das Grundelement 5.5 und das Basiselement 2 gelangen.

**Figuren 8A bis 8C** zeigen schematisch in perspektivischer, in teilweise geschnittener in Längs- und in Querrichtung den Verriegelungsmechanismus 5 für den Schwebesitz 1 in entriegelter Stellung E1, in welcher der pyrotechnische Treibsatz 7.4 für die automatische Auslösung noch nicht ausgelöst hat. Damit ist ein Keilelement 7.3, das vom Treibsatz 7.4 in einem Kollisionsfall angetrieben wird, in einer Ausgangsstellung AS1 angeordnet. In dieser Ausgangsstellung AS1 ist das Keilelement 7.3 in einer Ebene mit der Führungsfläche 5.4, so dass das Verstellelement 5.2 und der Verriegelungsbolzen 5.1 in einer entriegelten Stellung E1 angeordnet sind.

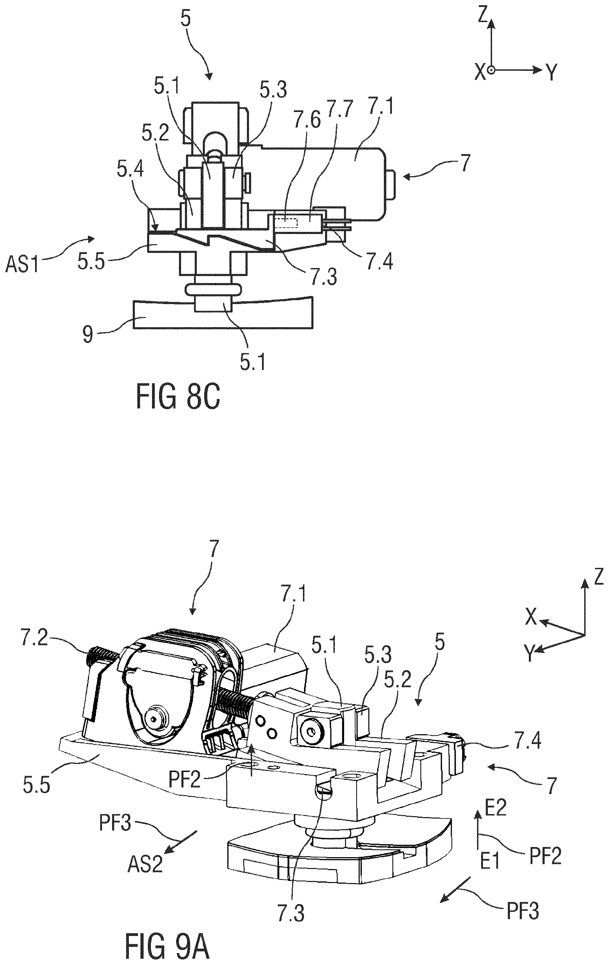

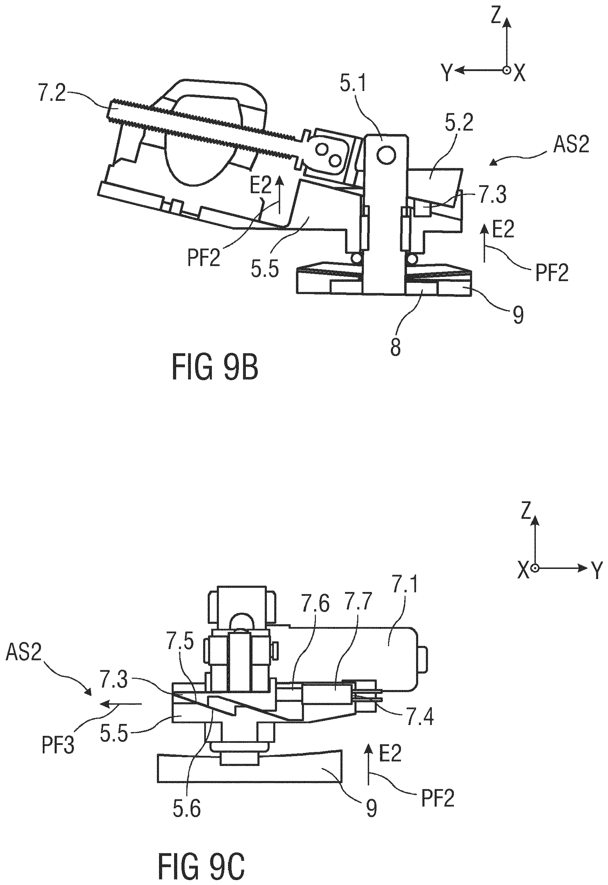

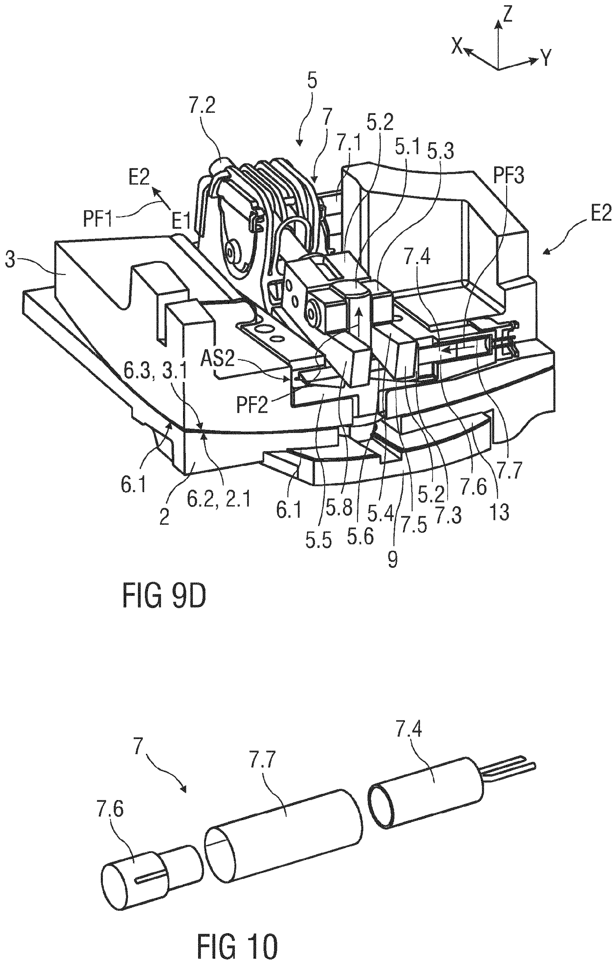

**Figuren 9A bis 9D** zeigen schematisch in perspektivischer Darstellung, in teilweise geschnittener in Längs- und in Querrichtung den Verriegelungsmechanismus 5 für den Schwebesitz 1 in verriegelter Stellung E2, in welcher der pyrotechnische Treibsatz 7.4 für die automatische Auslösung ausgelöst hat. Damit ist das Keilelement 7.3 vom aufgrund einer erkannten Kollision ausgelösten Treibsatz 7.4 angetrieben worden und in eine Auslösestellung AS2 gebracht worden. In dieser Auslösestellung AS2 ist das Keilelement 7.3 über die Ebene der Führungsfläche 5.4 hinausgehoben worden, so dass das Verstellelement 5.2 und der Verriegelungsbolzen 5.1 automatisch in die verriegelte Stellung E2 gebracht sind.

**Figur 9A** zeigt schematisch in perspektivischer Darstellung den Verriegelungsmechanismus 5 für den Schwebesitz 1 in der aufgrund eines Kollisionsfalles verriegelten, insbesondere angehobenen Stellung E2, in welcher das Befestigungselement 8 und das Bremselement 9 angehoben sind und die Sitzschale 4 verriegelt ist.

Der Auslösemechanismus 7 umfasst zusätzlich zur Betätigung des Verriegelungsmechanismus 5 in einem Kollisionsfall das verstellbare Keilelement 7.3, das mittels des pyrotechnischen Treibsatzes 7.4 bei dessen Auslösung in einem Kollisionsfall in die Auslösestellung AS2 und damit in eine verriegelnde Position verstellbar ist. Das Keilelement 7.3 ist insbesondere zwischen dem Grundelement 5.5 des Verriegelungsmechanismus 5 und dem Verstellelement 5.2 für den Normalbetrieb angeordnet.

Im Kollisionsfall wird das Keilelement 7.3 durch Auslösung des pyrotechnischen Treibsatzes 7.4 gemäß Pfeil PF3 verstellt, insbesondere vorgetrieben oder bewegt. Das Keilelement 7.3 weist mindestens eine Keilfläche 7.5 auf, welche auf eine hierzu korrespondierende Gleitfläche 5.6 des Grundelements 5.5 gleitet (wie in **Figuren 8C** **und** **9C** in Schnittdarstellung gezeigt). Durch die Bewegung des Keilelements 7.3 zwischen das Verstellelement 5.2 und das feste Grundelement 5.5 wird das Verstellelement 5.2 in Hochrichtung Z und infolgedessen der Verriegelungsbolzen 5.1 ebenfalls in die verriegelte Stellung E2 gemäß Pfeil PF2 bewegt, insbesondere angehoben. Der pyrotechnische Treibsatz 7.4 ist beispielsweise ein linear wirkender Treibsatz.

**Figur 10** zeigt schematisch in Explosionsdarstellung ein Ausführungsbeispiel für einen im Kollisionsfall auslösenden Auslösemechanismus 7 in Form eines pyrotechnischen Treibsatzes 7.4, um den Verriegelungsmechanismus 5 automatisch auszulösen und in eine Verriegelungsposition oder verriegelte Stellung E2 zu stellen.

Der pyrotechnische Treibsatz 7.4 ist als ein pyrotechnischer Aktuator ausgebildet, der einen Kolben 7.6 vortreibt, welcher den Verriegelungsbolzen 5.1 indirekt über das mit dem Verstellelement 5.2 zusammenwirkende Keilelement 7.3 bewegt, insbesondere anhebt. Dabei wird das Keilelement 7.3 gemäß Pfeil PF3 bewegt, infolgedessen das Verstellelement 5.2 und mit diesem der Verriegelungsbolzen 5.1 gemäß Pfeil PF2 bewegt wird.

Optional kann der pyrotechnische Treibsatz 7.4 von einer Hülse 7.7, insbesondere einer Schutzhülse, umgeben sein.

Der Vorteil des beschriebenen Auslösemechanismus 7 mit separater Auslöseeinheit im Normalbetrieb und separater Auslöseeinheit im Kollisionsfall besteht insbesondere darin, dass im Normalbetrieb mittels nur einer Bedienung, insbesondere einer Ein-Knopf-/ Ein-Tastbedienung die Sitzschale 4 schwenkbar, insbesondere bewegbar ist, oder verriegelbar ist und im Kollisionsfall die Sitzschale 4 im Millisekundenbereich automatisch mittels des pyrotechnischen Treibsatzes 7.4 gegen Bewegung verriegelbar ist.

Insbesondere kann der Auslösemechanismus 7 beispielsweise mittels eines einfachen Schalters, einem Tast- oder Gestiksensors aktiviert und der Verstellmechanismus 6 entriegelt oder verriegelt werden. Dies erhöht den Bedienkomfort. Darüber hinaus weist der Schwebesitz 1 aufgrund der gelenkartigen Lagerung der Sitzschale 4 am Basiselement 2 einen hohen Sitz- und Verstellkomfort in Art eines Schwebezustands beim Verstellen des Sitzes auf.

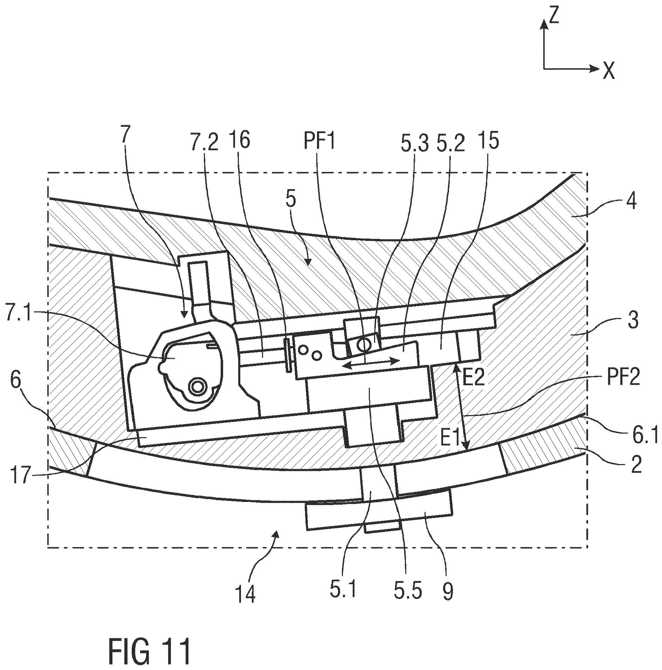

**Figur 11** zeigt schematisch in Schnittdarstellung einen Verriegelungsmechanismus 5 in Wirkzusammenhang mit einem Teil einer Bremseinheit 14 zum Bremsen und/oder Verriegeln der Bewegung eines Schwebesitzes 1 in X-Z-Richtung. Hierzu umfasst die Bremseinheit 14, wie oben beschrieben, den Verriegelungsbolzen 5.1, der mittels des in Längsrichtung X bewegbaren Verstellelements 5.2 (Pfeil PF1) in Hochrichtung Z zwischen einer entriegelten Stellung E1 und einer verriegelten Stellung E2 (Pfeil PF 2) verstellbar ist.

Der Verriegelungsmechanismus 5 ist insbesondere im Normalbetrieb als eine kontinuierliche oder stufenlose Verriegelung oder Arretierung ausgebildet. Hierzu weist der Verriegelungsmechanismus 5 beispielsweise eine elektromechanische Antriebseinheit, wie den Stellmotor 7.1 auf, der mit der Keilbremseinheit 13 zusammenwirkt, wie nachfolgend näher beschrieben wird.

Die elektromechanische Antriebseinheit ist in Kombination mit der Keilbremseinheit 13 ausgebildet, um eine Verstellung, insbesondere Neigung der Sitzschale 4 relativ zum Basiselement 2 um die Längs-, Quer- und/oder Hochachse X0, Y0 bzw. Z0 zumindest zu bremsen und/oder zu stoppen.

Der Verstellmechanismus 6 mit dem Verriegelungsmechanismus 5 ist an einer Sitzplatte 16 der Sitzschale 4 angeordnet. Zusätzlich kann ein Stützelement 15 für die Sitzplatte 16 sowie ein Trägerelement 17 für den Stellmotor 7.1 vorgesehen sein.

In einer weiteren Ausführungsform ist die elektromechanische Antriebseinheit als eine Motor-Getriebe-Einheit, beispielsweise ein Antriebs- oder Stellmotor in Kombination mit einem Spindelantrieb, ausgebildet.

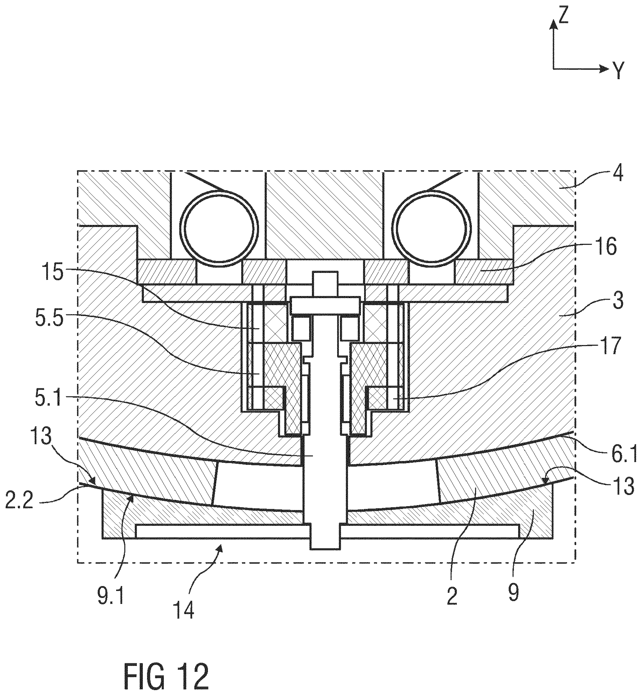

**Figur 12** zeigt schematisch in Schnittdarstellung den Verriegelungsmechanismus 5 in Wirkzusammenhang mit einem Teil der Bremseinheit 14, insbesondere der Keilbremseinheit 13 zum Bremsen der Bewegung, insbesondere Neigung des Schwebesitzes 1.

Die Keilbremseinheit 13 ist als eine Reibbremse ausgebildet und beispielsweise durch Form und/oder Material von aneinander anliegenden Oberflächen des Basiselements 2 und des Bremselements 9 gebildet. So ist beispielsweise die dem Bremselement 9 zugewandte Oberfläche 2.2 des Basiselements 2 aus einem besonders harten Material mit einem hohen E-Modul, insbesondere in einem Bereich von 5.000 MPa (Druckhärte nach Rockwell, DIN 2039-1), und die dem Basiselement 2 zugewandte Oberfläche 9.1 des Bremselements 9 aus einem weichen Material mit einem geringeren E-Modul von circa 70+/-10 Shore-A (nach DIN 53505) und hoher Elastizität gebildet oder umgekehrt.

Beispielsweise ist das Basiselement 2 aus Polyamid und das Bremselement 9 aus Ethylen-Propylen-Dien-Kautschuk (kurz EPDM genannt) gebildet. Zusätzlich kann zumindest eine der Oberflächen 2.2 oder 9.1 aufgeraut sein. Insbesondere ist diejenige Oberfläche 2.2 oder 9.1, die aus einem härteren Material gebildet ist, aufgeraut. Beispielsweise ist die Oberfläche 2.2 mit einem zwischen 0,2 mm bis 0,8 mm tiefen Oberflächenprofil oder einer Oberflächenstruktur versehen. Auch können sowohl das Basiselement 2 als auch das Bremselement 9 aus einem harten Material gebildet sein, wobei eines dieser Elemente mit einer weichen oder flexiblen Beschichtung und/oder einer entsprechenden tiefen Oberflächenstruktur als Bremsschicht versehen ist.

Mit anderen Worten: Die Keilbremseinheit 13 umfasst beispielsweise gegenläufige Brems-, Keil- und/oder Reibflächen. Beispielsweise weist eine Bremsfläche, zum Beispiel die Oberfläche 9.1, eine sphärische Form auf, welche auf eine dazu gegenläufig geneigte Brems-, Gleit- oder Führungsfläche, beispielsweise die Oberfläche 2.2, gedämpft gleitet und dadurch abbremst und abstoppt bis keine Relativbewegungen mehr auftreten und damit verriegelt. Zusätzlich können eine der Oberflächen 2.2 oder 9.1 oder beide mit einer Bremsschicht (zum Beispiel aus einem weicheren Material) und/oder einem Bremsprofil (Aufrauhung) versehen sein.

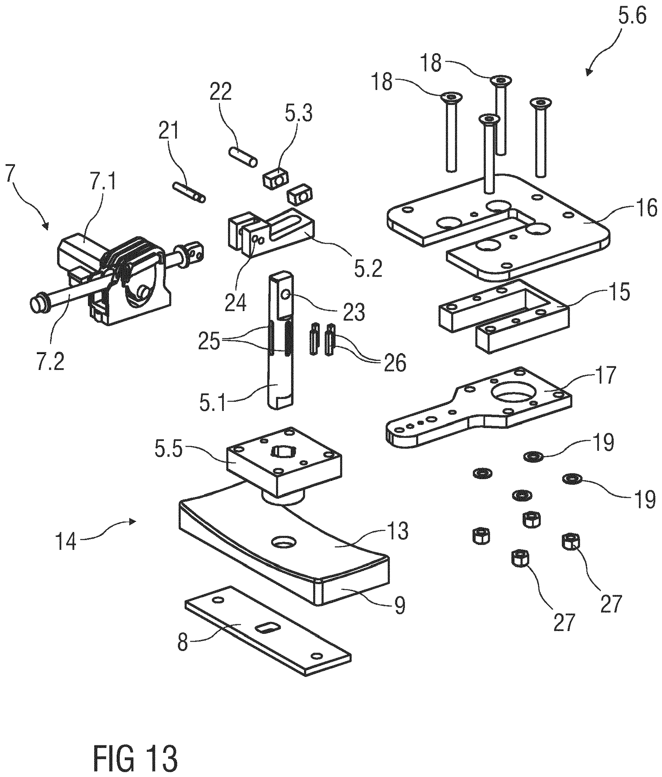

**Figur 13** zeigt schematisch in Explosionsdarstellung Komponenten, wie einen Stellmotor 7.1 mit Gewindestange 7.2, ein Keil- oder Verstellelement 7.3, 5.2, einen Gleiter oder Schlitten 5.3, einen Verriegelungsbolzen 5.1, ein Lager- oder Grundelement 5.5 für den Verriegelungsbolzen 5.1, ein Bremselement 9, ein Befestigungselement 8 sowie eine Sitzplatte 16, ein Stützelement 15 für die Sitzplatte 16 und ein Trägerelement 17 für den Stellmotor 7.1 eines kombinierten Verriegelungs- und Verstellmechanismus 5, 6 mit integrierter Keilbremseinheit 13 für einen Schwebesitz 1. Zur Verbindung der Komponenten sind Schrauben 18, Unterlegscheiben 19 und Muttern 27 vorgesehen.

Die Gewindestange 7.2 ist mittels eines Stifts 21 am Keil- oder Verstellelement 7.3, 5.2 gehalten. Das Verstellelement 5.2 weist dazu eine korrespondierende Stiftöffnung 24 auf.

Die Schlitten 5.3 sind mittels eines Pins 22 am Verriegelungsbolzen 5.1 gehalten. Der Verriegelungsbolzen 5.1 weist dazu eine korrespondierende Pinöffnung 23 auf.

Zusätzlich kann der Verriegelungsbolzen 5.1 mit Schlitzen 25 zur Aufnahme von Schlüsseln 26 versehen sein.

### Bezugszeichenliste

- 1, 100: Schwenk- oder Schwebesitz
- 2, 20: Basiselement
- 2.1: Gleitfläche
- 2.2: Oberfläche
- 3, 30: Adapterelement
- 3.1: Gegen- oder Lauffläche
- 4, 40: Sitzschale
- 4.1: Sitzteil
- 4.2: Sitzlehne
- 4.3: Träger
- 4.4: Polsterelement
- 5: Verriegelungsmechanismus
- 5.1: Verriegelungsbolzen
- 5.2: Verstellelement
- 5.3: Gleiter/Schlitten
- 5.4: Führungsfläche
- 5.5: Grundelement
- 5.6: Gleitfläche
- 5.7: Führungsfläche
- 5.8: Keilform
- 6, 60: Verstellmechanismus
- 6.1: Schalengleitlager
- 6.2: Gleitfläche
- 6.3: Lauffläche
- 7: Auslösemechanismus
- 7.1: Stellmotor
- 7.2: Gewindestange
- 7.3: Keilelement
- 7.4: pyrotechnischer Treibsatz
- 7.5: Keilfläche
- 7.6: Kolben
- 7.7: Hülse
- 8: Befestigungselement
- 9: Bremselement
- 9.1: Oberfläche
- 10: Längsverstelleinheit
- 11: Höhenverstelleinheit
- 12: Antriebseinheit
- 13: Keilbremseinheit
- 14: Bremseinheit
- 15: Stützelement
- 16: Sitzplatte
- 17: Trägerelement
- 18: Schrauben
- 19: Unterlegscheibe
- 21: Stift
- 22: Pin
- 23: Pinöffnung
- 24: Stiftöffnung
- 25: Schlitz
- 26: Schlüssel
- 27: Mutter
- 32: Oberflächenform
- 33: Teilgleitflächen
- 34: Ausnehmung
- 35: Befestigungsbolzen
- 36: Befestigungsflaschen
- 37: Sitzrahmen
- 41: Sitzteil
- 41.1: Gleitfläche
- 42: Rahmenschale
- 43: Anbindungspunkte
- 44: Sicherheitsgurt
- 61: Mehrgleitflächenlager
- AS1: Ausgangsstellung
- AS2: Auslösestellung
- E1: entriegelte Stellung
- E2: verriegelte Stellung
- F1-F3: Freiheitsgrade
- G: Gleitlager oder Gelenklager
- P1-P3: Design- oder Sitzposition
- PF1-PF3: Pfeil
- R1-R3: Rotationsfreiheitsgrade
- T1-T2: Translationsfreiheitsgrade
- V: Verstellung
- X: Längsrichtung
- Y: Querrichtung
- Z: Hochrichtung
- Z0: Hochachse
- Y0: Querachse
- X0: Längsachse

## Patentansprüche

1. Schwebesitz (1), umfassend
- ein Basiselement (2),
und
- eine Sitzschale (4),
wobei zumindest zwischen Sitzschale (4) und Basiselement (2) ein Verstellmechanismus (6) in Art eines Gleitlagers (G) gebildet ist, wobei die Sitzschale (4) mittels des Verstellmechanismus (6) zumindest in zwei Rotationsfreiheitsgraden (R1-R3) relativ zum Basiselement (2) verstellbar ist, **dadurch gekennzeichnet, dass** ein Verriegelungsmechanismus (5) zur Ver- und/oder Entriegelung einer Verstellung der Sitzschale (4) relativ zum Basiselement (2) vorgesehen ist, dass der Verriegelungsmechanismus (5) mittels eines Auslösemechanismus (7) betätigbar ist, und dadurch, dass der Auslösemechanismus (7) eingerichtet ist, den Verriegelungsmechanismus (5) im Normalbetrieb zur Ent- oder Verriegelung der Verstellung der Sitzschale (4) relativ zum Basiselement (2) manuell oder elektrisch zu betätigen und im Kollisionsfall automatisch zu betätigen, um die Verstellung der Sitzschale (4) relativ zum Basiselement (2) automatisch zu verriegeln.

2. Schwebesitz (1) nach Anspruch 1, wobei das Gleitlager (G) in Art eines Kugelgelenks oder Schalengleitlagers (6.1) oder als ein Mehrgleitflächenlager (61) ausgebildet ist.

3. Schwebesitz (1) nach einem der vorhergehenden Ansprüche, wobei das Gleitlager (G) ausgebildet ist, die Sitzschale (4) relativ zum Basiselement (2) in Längsrichtung (X) um eine Querachse (Y0) in einem Bereich zwischen 0° und 120° zu neigen, in Querrichtung (Y) um eine Längsachse (X0) in einem Bereich zwischen 0° und 10°, insbesondere 0° und 5° zu rollen und/oder in Hochrichtung (Z) um eine Hochachse (Z0) in einem Bereich von 0° bis 360°, insbesondere von 0° bis maximal 20° zu drehen.

4. Schwebesitz (1) nach einem der vorhergehenden Ansprüche, wobei zwischen Basiselement (2) und Sitzschale (4) ein Adapterelement (3) angeordnet ist.

5. Schwebesitz (1) nach Anspruch 4, wobei das Adapterelement (3) eine Kugelschalenform aufweist.

6. Schwebesitz (1) nach einem der vorhergehenden Ansprüche, wobei der Verriegelungsmechanismus (5) vorgesehen ist, der die Sitzschale (4) in einer beliebig einstellbaren Position relativ zum Basiselement (2) fixiert.

7. Schwebesitz (1) nach einem der vorhergehenden Ansprüche 4 bis 6, wobei der Verriegelungsmechanismus (5) im Adapterelement (3) angeordnet ist.

8. Schwebesitz (1) nach einem der vorhergehenden Ansprüche, wobei der Verriegelungsmechanismus (5) eine elektromechanische Antriebseinheit (12) umfasst, die mit einer Bremseinheit (14) zusammenwirkt, die zwischen Sitzschale (4) und Basiselement (2) eingreift.

9. Schwebesitz (1) nach einem der vorhergehenden Ansprüche, wobei der Verriegelungsmechanismus (5) als eine kontinuierliche oder stufenlose Verriegelung ausgebildet ist.

10. Schwebesitz (1) nach einem der vorhergehenden Ansprüche, wobei der Auslösemechanismus (7) zur manuellen oder elektrischen Betätigung des Verriegelungsmechanismus (5) im Normalbetrieb einen Stellmotor (7.1) umfasst.

11. Schwebesitz (1) nach einem der vorhergehenden Ansprüche, wobei der Auslösemechanismus (7) zur automatischen Betätigung des Verriegelungsmechanismus (5) im Kollisionsfall einen pyrotechnischen Treibsatz (7.4) umfasst.

12. Schwebesitz (1) nach Anspruch 11, wobei der Auslösemechanismus (7) ein verstellbares Keilelement (7.3) umfasst, das mittels des pyrotechnischen Treibsatzes (7.4) bei dessen Auslösung von einer Ausgangsstellung (AS1) in eine Auslösestellung (AS2) verstellbar ist.

13. Schwebesitz (1) nach Anspruch 12, wobei das Keilelement (7.3) derart mit dem Verriegelungsmechanismus (5) bewegungsgekoppelt ist, dass bei Verstellung des Keilelements (7.3) in die Auslösestellung (AS2) der Verriegelungsmechanismus (5) automatisch die Sitzschale (4) verriegelt.

14. Schwebesitz (1) nach Anspruch 12 oder 13, wobei das Keilelement (7.3) derart mit dem Verriegelungsmechanismus (5) bewegungsgekoppelt ist, dass bei Verstellung des Keilelements (7.3) in die Auslösestellung (AS2) ein Verriegelungsbolzen (5.1) automatisch angehoben wird.

15. Fahrzeug mit einem Schwebesitz (1) nach einem der vorhergehenden Ansprüche.

## Claims

1. Floating seat (1), comprising
- a base element (2),
and
- a seat shell (4),
wherein an adjustment mechanism (6) in the manner of a plain bearing (G) is formed at least between the seat shell (4) and the base element (2), wherein the seat shell (4) is adjustable by means of the adjustment mechanism (6) at least in two degrees of rotational freedom (R1-R3) relative to the base element (2), **characterized in that** a locking mechanism (5) is provided for locking and/or unlocking an adjustment of the seat shell (4) relative to the base element (2), **in that** the locking mechanism (5) is actuable by means of a triggering mechanism (7), and **in that** the triggering mechanism (7) is configured to manually or electrically actuate the locking mechanism (5) during normal operation in order to unlock or lock the adjustment of the seat shell (4) relative to the base element (2) and to automatically actuate same in the event of a collision, in order to automatically lock the adjustment of the seat shell (4) relative to the base element (2).

2. Floating seat (1) according to Claim 1, wherein the plain bearing (G) is designed in the manner of a ball and socket joint or split plain bearing (6.1) or in the form of a multiple-surface plain bearing (61) .

3. Floating seat (1) according to either of the preceding claims, wherein the plain bearing (G) is designed to incline the seat shell (4) relative to the base element (2) in the longitudinal direction (X) about a transverse axis (Y0) within a range of between 0° and 120°, to roll same in the transverse direction (Y) about a longitudinal axis (X0) within a range of between 0° and 10°, in particular 0° and 5°, and/or to rotate same in the vertical direction (Z) about a vertical axis (Z0) within a range of 0° to 360°, in particular of 0° to at maximum 20°.

4. Floating seat (1) according to one of the preceding claims, wherein an adapter element (3) is arranged between the base element (2) and the seat shell (4).

5. Floating seat (1) according to Claim 4, wherein the adapter element (3) has a spherical shell shape.

6. Floating seat (1) according to one of the preceding claims, wherein the locking mechanism (5) is provided which fixes the seat shell (4) in an arbitrarily settable position relative to the base element (2).

7. Floating seat (1) according to one of the preceding Claims 4 to 6, wherein the locking mechanism (5) is arranged in the adapter element (3).

8. Floating seat (1) according to one of the preceding claims, wherein the locking mechanism (5) comprises an electromechanical drive unit (12) which interacts with a brake unit (14) which engages between the seat shell (4) and the base element (2).

9. Floating seat (1) according to one of the preceding claims, wherein the locking mechanism (5) is designed as a continuous or infinitely variable lock.

10. Floating seat (1) according to one of the preceding claims, wherein the triggering mechanism (7) for manually or electrically actuating the locking mechanism (5) during normal operation comprises a servomotor (7.1).

11. Floating seat (1) according to one of the preceding claims, wherein the triggering mechanism (7) for automatically actuating the locking mechanism (5) in the event of a collision comprises a pyrotechnic propellant (7.4).

12. Floating seat (1) according to Claim 11, wherein the triggering mechanism (7) comprises an adjustable wedge element (7.3) which is adjustable from a starting position (AS1) into a triggering position (AS2) by means of the pyrotechnic propellant (7.4) when the latter is triggered.

13. Floating seat (1) according to Claim 12, wherein the wedge element (7.3) is coupled in terms of movement to the locking mechanism (5) in such a manner that, when the wedge element (7.3) is adjusted into the triggering position (AS2), the locking mechanism (5) automatically locks the seat shell (4).

14. Floating seat (1) according to Claim 12 or 13, wherein the wedge element (7.3) is coupled in terms of movement to the locking mechanism (5) in such a manner that, when the wedge element (7.3) is adjusted into the triggering position (AS2), a locking bolt (5.1) is automatically raised.

15. Vehicle with a floating seat (1) according to one of the preceding claims.

## Revendications

1. Siège flottant (1), comprenant
- un élément de base (2),
et
- une coque de siège (4),
un mécanisme de réglage (6) sous forme d'un palier lisse (G) étant formé au moins entre la coque de siège (4) et l'élément de base (2), la coque de siège (4) pouvant être réglée au moyen du mécanisme de réglage (6) dans au moins deux degrés de liberté de rotation (R1-R3) par rapport à l'élément de base (2), **caractérisé en ce qu'**un mécanisme de verrouillage (5) pour le verrouillage et/ou le déverrouillage d'un réglage de la coque de siège (4) par rapport à l'élément de base (2) est prévu, **en ce que** le mécanisme de verrouillage (5) est actionnable au moyen d'un mécanisme de déclenchement (7), et **en ce que** le mécanisme de déclenchement (7) est conçu pour, en mode d'exploitation normal, actionner manuellement ou électriquement le mécanisme de verrouillage (5) pour le déverrouillage ou le verrouillage du réglage de la coque de siège (4) par rapport à l'élément de base (2) et, en cas de collision, actionner automatiquement le mécanisme de verrouillage (5) pour verrouiller automatiquement le réglage de la coque de siège (4) par rapport à l'élément de base (2).

2. Siège flottant (1) selon la revendication 1, dans lequel le palier lisse (G) est configuré sous la forme d'une articulation sphérique ou d'un palier lisse à coque (6.1) ou sous la forme d'un palier à surfaces lisses multiples (61).

3. Siège flottant (1) selon l'une quelconque des revendications précédentes, dans lequel le palier lisse (G) est configuré pour incliner la coque de siège (4) par rapport à l'élément de base (2) dans la direction longitudinale (X) autour d'un axe transversal (Y0) dans une plage comprise entre 0° et 120°, pour faire rouler la coque de siège (4) dans la direction transversale (Y) autour d'un axe longitudinal (X0) dans une plage comprise entre 0° et 10°, notamment entre 0° et 5°, et/ou pour faire tourner la coque de siège (4) dans la direction verticale (Z) autour d'un axe vertical (Z0) dans une plage allant de 0° à 360°, notamment de 0° à au plus 20°.

4. Siège flottant (1) selon l'une quelconque des revendications précédentes, dans lequel un élément adaptateur (3) est agencé entre l'élément de base (2) et la coque de siège (4).

5. Siège flottant (1) selon la revendication 4, dans lequel l'élément adaptateur (3) présente une forme de coque sphérique.

6. Siège flottant (1) selon l'une quelconque des revendications précédentes, dans lequel le mécanisme de verrouillage (5) est prévu pour fixer la coque de siège (4) dans une position ajustable de manière quelconque par rapport à l'élément de base (2).

7. Siège flottant (1) selon l'une quelconque des revendications 4 à 6 précédentes, dans lequel le mécanisme de verrouillage (5) est agencé dans l'élément adaptateur (3).

8. Siège flottant (1) selon l'une quelconque des revendications précédentes, dans lequel le mécanisme de verrouillage (5) comporte une unité d'entraînement électromécanique (12), qui coopère avec une unité de freinage (14), qui s'engage entre la coque de siège (4) et l'élément de base (2).

9. Siège flottant (1) selon l'une quelconque des revendications précédentes, dans lequel le mécanisme de verrouillage (5) est configuré sous la forme d'un verrouillage continu ou sans paliers.

10. Siège flottant (1) selon l'une quelconque des revendications précédentes, dans lequel le mécanisme de déclenchement (7) comporte un servomoteur (7.1) pour l'actionnement manuel ou électrique du mécanisme de verrouillage (5) en mode d'exploitation normal.

11. Siège flottant (1) selon l'une quelconque des revendications précédentes, dans lequel le mécanisme de déclenchement (7) comporte un propulseur pyrotechnique (7.4) pour l'actionnement automatique du mécanisme de verrouillage (5) en cas de collision.

12. Siège flottant (1) selon la revendication 11, dans lequel le mécanisme de déclenchement (7) comporte un élément cale réglable (7.3), qui peut être réglé d'une position initiale (AS1) dans une position de déclenchement (AS2) au moyen du propulseur pyrotechnique (7.4) lors de son déclenchement.

13. Siège flottant (1) selon la revendication 12, dans lequel l'élément cale (7.3) est couplé en mouvement avec le mécanisme de verrouillage (5) de telle sorte que lors du réglage de l'élément cale (7.3) dans la position de déclenchement (AS2), le mécanisme de verrouillage (5) verrouille automatiquement la coque de siège (4).

14. Siège flottant (1) selon la revendication 12 ou 13, dans lequel l'élément cale (7.3) est couplé en mouvement avec le mécanisme de verrouillage (5) de telle sorte que lors du réglage de l'élément cale (7.3) dans la position de déclenchement (AS2), un boulon de verrouillage (5.1) est automatiquement soulevé.

15. Véhicule muni d'un siège flottant (1) selon l'une quelconque des revendications précédentes.
